# EUROPEAN PATENT APPLICATION

(11) **EP 3 815 867 A1**
(43) Date of publication of application: **05.05.2021**
(21) Application number: 20204484.8
(22) Date of filing: 28.10.2020
(51) Int. Cl.: B29B 17/04, B02C 19/06, B26F 3/00, B26D 7/00, B29K 105/24, B29L 30/00, B29L 29/00

(54) **METHOD OF RECYCLING THERMOSETTING POLYMER OBJECT OF ARBITRARY SHAPE**

(30) Priority: 31.10.2019 TW 108139521; 20.10.2020 TW 109136255
(71) Applicant: Gongin Precision Industries Co., Ltd., Kaohsiung City, Taiwan 81453 (TW)
(72) Inventor: SU, Yo-Hsin, 81453 Taiwan (TW); CHENG, Pin-Tsung, 80283 Taiwan (TW)
(74) Representative: Sackin, Robert

(57) **Abstract**

A method of recycling a thermosetting polymer object (5) of arbitrary shape includes: operating a fixture device (2) to hold and rotate the thermosetting polymer object (5); operating a smart and modularized water jet cutter device (3) to shatter the thermosetting polymer object (5) outside-in into a wet polymer powder; drying the wet polymer powder; flattening the partially dried wet polymer powder; completely drying the flattened wet polymer powder; and separating the dried polymer powder into first and second groups, the particle size of the first group dried polymer powder being greater than a predetermined value, the particle size of the second group fried polymer powder being not greater than the predetermined value.

## Description

The disclosure relates to a method of recycling an object, and more particularly to a method of recycling a thermosetting polymer object of arbitrary shape.

Traditionally, waste tires have been disposed of either by landfill or incineration. Landfill, however, occupies a large space. When the waste tires are without properly treatment, if the water accumulates into the waste tires may contribute to mosquito breeding. Incineration may cause air pollution and soil contamination due to chemicals generated during incineration. In response to the international environmental regulations, the concepts of circular economy and recycling of waste tires have gained popularity. Currently, a rather advanced way of treating waste tires involves mechanically shattering the waste tires into polymer powder. The polymer powder is then ground or thermally decomposed to obtain recyclable component of the polymer powder for reuse or other applications, such as rubber floor tiles, building materials, asphalt concrete, paving road, etc. As a result, the industry has invested a great deal of effort in developing more economical ways of recycling waste tires to fulfill the need of circular economy.

Taiwanese Patent No. I361730B1 discloses a method of recycling waste tires. First, a waste tire is measured to obtain its dimension and weight. Second, shattering the waste tire using a high speed fluid jet parameters based on the measured parameters. However, the tires of various dimensions, the measuring step needs to be repeated. In addition, the high speed fluid jet has a fixed ejection head, and needs to be adjusted for shattering tires of different dimensions. There remains a need for improving the recycling process. Moreover, it is also desirable in the art to improve recycling efficiency for various objects, such as phenol formaldehyde resin, carbon fiber composite, conveyor belt, conveyor pad, etc.

Therefore, an aspect of the present disclosure provides a method of recycling a thermosetting polymer object of arbitrary shape. The method includes:
operating a fixture device to hold and rotate the thermosetting polymer object of arbitrary shape about a predetermined axis;
operating a smart and modularized water jet cutter device to shatter the thermosetting polymer object held by the fixture device in an outside-in manner to form a wet polymer powder, the smart and modularized water jet cutter device including a smart and multi-axis robotic arm, a rotatable multi-water jets cutter head package that is co-movably disposed on the smart and multi-axis robotic arm, and a centralized controlling unit operable to control the smart and multi-axis robotic arm and the rotatable multi-water jets cutter head package for shattering the thermosetting polymer object of arbitrary shape, the rotatable multi-water jets cutter head package including a jets head that is co-movably connected to the robotic arm and a plurality of rotary jets nozzles that are disposed on the jets head and that are divided into two groups in mirror symmetry relative to a short axis of the jets head, the rotary jets nozzles being rotatable relative to the jets head, the centralized controlling unit being operable to control three-dimensional movement path of the robotic arm, a Reynolds Number and a kinetic energy of a fluid ejected by the rotatable multi-water jets cutter head package, a dynamic contact time between the fluid ejected by the rotatable multi-water jets cutter head package and the thermosetting polymer object, and an attacking angle of the jets head of the rotatable multi-water jets cutter head package, the cleanness of the thermosetting polymer object and the particle size of the wet polymer powder being adjustable through controlling the centralized controlling unit and selection of the modularized program of the smart and modularized water jet cutter device;
centrifugally preloading and partially drying the wet polymer powder to form a partially dried wet polymer powder;
fattening the partially dried wet polymer powder to form a flattened wet polymer powder with a predetermined thickness;
completely drying the flattened wet polymer powder to form a dried polymer powder; and
separating the dried polymer powder in an enclosed space into a first group and a second group, the particle size of the dried polymer powder in the first group being greater than a predetermined value, the particle size of the dried polymer powder in the second group being not greater than the predetermined value.

Other features and advantages of the disclosure will become apparent in the following detailed description of the embodiments with reference to the accompanying drawings, of which:
FIG. 1 is a flow chart of an embodiment of a method of recycling a thermosetting polymer object of arbitrary shape according to the present disclosure;
FIG. 2 is a perspective view, showing a waste tire being cut into a tire crown and two tire sidewalls;
FIG. 3 is a fragmentary top view, showing the tire crown being disposed on a rotatable disk of a fixtures device;
FIG. 4 is a schematic view of a smart and modularized water jet cutter device usable for shattering the thermosetting polymer object of arbitrary shape;
FIG. 5 is a perspective view of a rotary jets nozzle of the smart and modularized water jet cutter device;
FIG. 6 shows a relationship between the passing rate of shattered polymer powder with different sizes versus the opening size of meshes used for filtering the shattered polymer powder; and
FIG. 7 shows a variation for recycling the thermosetting polymer object of arbitrary shape, in which the thermosetting polymer object of arbitrary shape is the tire sidewall.

Before the disclosure is described in greater detail, it should be noted that where considered appropriate, reference numerals or terminal portions of reference numerals have been repeated among the figures to indicate corresponding or analogous elements, which may optionally have similar characteristics.

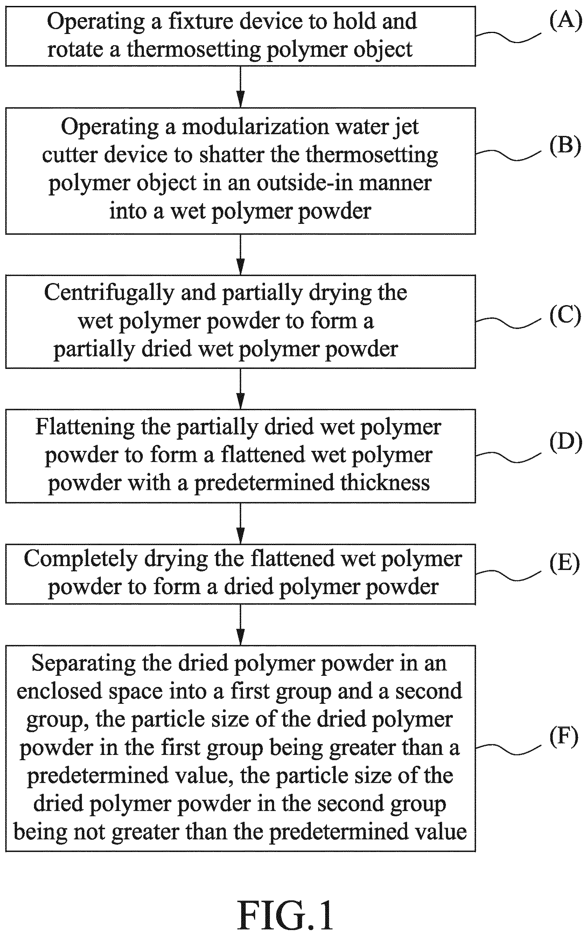

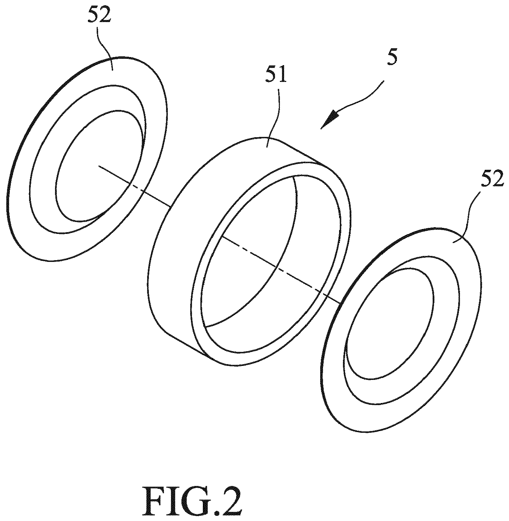

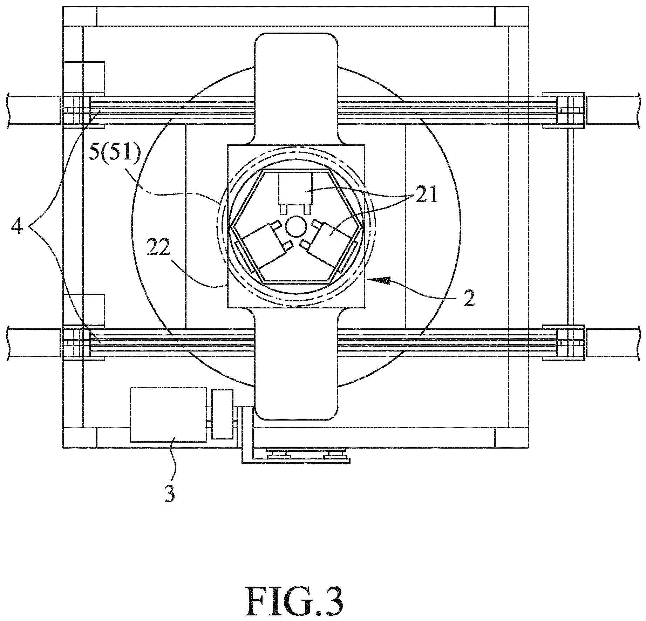

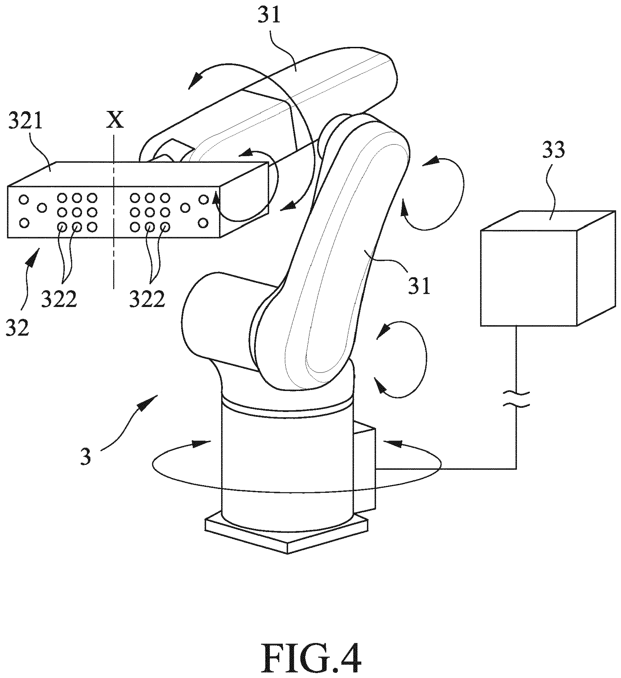

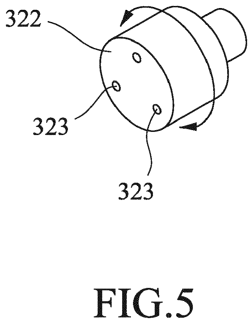

Referring to FIGS. 1 to 5, an embodiment of a method of recycling a thermosetting polymer object 5 of arbitrary shape includes steps (A) to (F). The thermosetting polymer object 5 of arbitrary shape may be a tire crown 51 or tire sidewalls 52 of a waste tire (e.g., a defective tire, a flat tire, or the like) . In certain embodiments, the method of this disclosure may also be used for recycling other types of materials, such as carbon fiber composite, phenol formaldehyde resin, Kevlar, etc., and other types of objects, such as conveyor belt, conveyor pad, etc. In this embodiment, the thermosetting polymer object 5 of arbitrary shape is exemplified to be the tire crown 51.

In step (A), a fixture device 2 is operated to hold and rotate the tire crown 51. In this embodiment, the tire crown 51 is transferred to the fixture device 2 through a conveyor 4. The fixture device 2 includes a rotatable disk 22, and an expandable holder 21 that is co-rotatably disposed on the rotatable disk 22 and that is adapted to be disposed in the tire crown 51 such that the expandable holder 21 presses against the inner periphery of the tire crown 51, so that the expandable holder 21 and the tire crown 51 are co-rotatable with the rotatable disk 22.

In step (B), a smart and modularized water jet cutter device 3 is operated to shatter the tire crown 51 in an outside-in manner to form a wet polymer powder (not shown) . In this embodiment, the smart and modularized water jet cutter device 3 includes a smart and multi-axis robotic arm 31 of AIoT (artificial intelligence and internet of things) and visualization, a rotatable multi-water jets cutter head package 32 that is co-movably disposed on the smart and multi-axis robotic arm 31, and a centralized controlling unit 33 that is in electrical communication with the smart and multi-axis robotic arm 31 and the rotatable multi-water jets cutter head package 32 for operating the smart and multi-axis robotic arm 31 and the rotatable multi-water jets cutter head package 32, and to control three-dimensional movement path of the robotic arm 31. The rotatable multi-water jets cutter head package 32 includes a jets head 321 that is co-movably disposed on the smart and multi-axis robotic arm 31, and a plurality of rotary jets nozzles 322 that are detachably and rotatably disposed on the jets head 321 and that are divided into two groups in mirror symmetry relative to a short axis (X) of the jets head 321. The smart and multi-axis robotic arm 31 may include multiple arm portions each being rotatable about a certain axis to allow the rotatable multi-water jets cutter head package 32 to be moved in various directions . In this embodiment, the rotary jets nozzles 322 are rotatable relative to the jets head 321 and having a plurality of nozzle holes 323, and are co-rotatable with the jets head 321 relative to the smart and multi-axis robotic arm 31. In this embodiment, the smart and multi-axis robotic arm 31 is operable by the centralized controlling unit 33 to move along a path that is of a shape selected from the group consisting of helix, ellipse, polygon, and combinations thereof, and the polygon is selected from the group consisting of star, rhombus, trapezoid, and combinations thereof. Such path is a customizable tire demolition path defined by a user, which provides superior flexibility and efficiency to the smart and modularized water jet cutter device 3. It should be noted that the path of the mart and multi-axis robotic arm 31 may be changed according to practical requirements. The centralized controlling unit 33 is also operable to control the speed and angle of a fluid ejected by the rotatable multi-water jets cutter head package 32, and the attacking angle of the jets head 321 of the rotatable multi-water jets cutter head package 32.

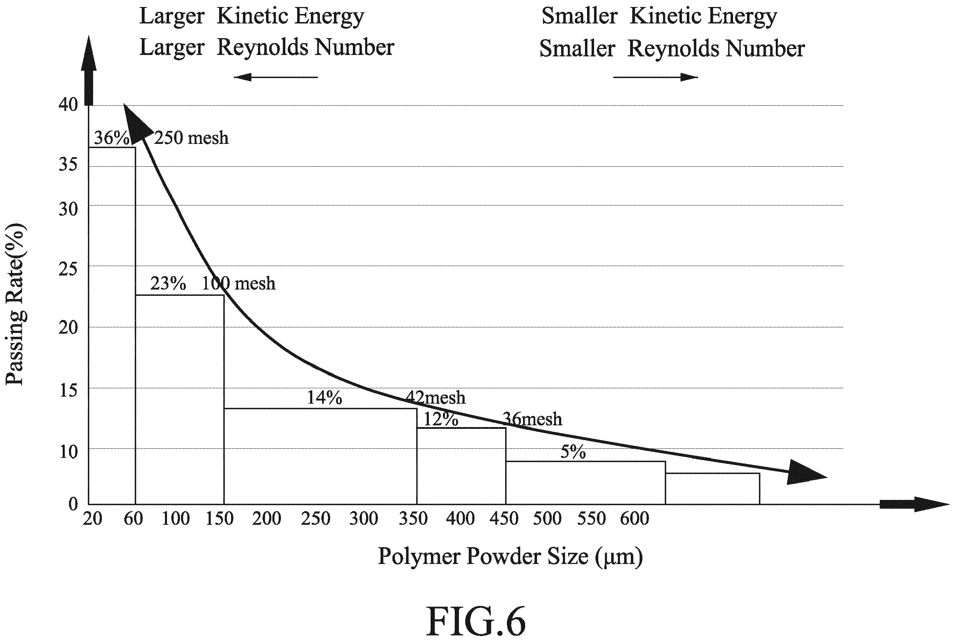

The fluid ejected by the rotatable multi-water jets cutter head package 32 of the smart and modularized water jet cutter device 3 has a Reynolds Number, and the particle size of the wet polymer powder is inversely proportional to the Reynolds Number of the fluid. The larger the Reynolds Number is, the higher the kinetic energy of the ejected fluid is and the smaller the particle size is. Conversely, the smaller the Reynolds Number is, the lower the kinetic energy of the ejected fluid is and the larger the particle size is. The particle size of the wet polymer powder can be controlled by changing the Reynolds Number of the fluid ejected by the rotatable multi-water jets cutter head package 32. In certain embodiments, the rotatable multi-water jets cutter head package 32 may rotate at a rate of 3000 rpm, and the fluid ejected from the rotatable multi-water jets cutter head package 32 may have a speed of 700 m/s and may have a Reynolds Number larger than 500,000. In addition, a distance between the rotatable multi-water jets cutter head package 32 and the tire crown 51 may range from 10 mm to 20 mm. FIG. 6 shows a relationship between the passing rate of polymer powder with different sizes versus the opening size of meshes. For example, the polymer powder with smaller particle size (e.g., 60 µm) can still achieve higher passing rate (e.g., 36%) even with the mesh of smaller opening size (e.g., 250 mesh), while the polymer powder with larger particle size (e.g., 450 µm) can only achieve smaller passing rate (e.g., 12%) even with the mesh of larger opening size (e.g., 36 mesh) . FIG. 6 also schematically shows that an ejected fluid with larger Reynolds Number would result in polymer powder with smaller particle size. Conversely, an ejected fluid with smaller Reynolds Number would result in polymer powder with larger particle size.

In some embodiments, the centralized controlling unit 33 is operable to control the pressure and/or the kinetic energy (e.g., 100 kilojoules/mole to 5000 kilojoules/mole) of the ejected fluid through an inverter motor to control the Reynolds Number of the ejected fluid. In some embodiments, the centralized controlling unit 33 is operable to control rotation of the rotary jets nozzles 322 and/or the rotatable multi-water jet cutter head package 32 (e.g., 2000 circles/min) to control the dynamic contact time of the ejected fluid with the thermosetting polymer object 5 of arbitrary shape. In some embodiments, the contact time ranges from 0.1 microsecond to 45 microseconds.

The abovementioned parameters (i.e., the Reynolds Number, the speed, the angle and the kinetic energy of the ejected fluid, the rotation of the rotatable multi-water jet cutter head package 32, the contact time, etc.) can be modulated and controlled according to practical requirements to achieve effective shattering of the thermosetting polymer object 5 of arbitrary shape. In addition, the cleanness of the thermosetting polymer object 5 and the particle size of the wet polymer powder are adjustable through controlling the centralized controlling unit 33 and selection of the modularized program of the smart and modularized water jet cutter device 3, thereby achieving automated and smart shattering of the thermosetting polymer object 5 of arbitrary shape.

In step (C), the wet polymer powder is then centrifugally preloading and partially dried to form a partially dried wet polymer powder.

In step (D), the partially dried wet polymer powder is flattened to form a flattened wet polymer powder with a predetermined thickness via a device, such as a spatula (not shown) or a gas-blowing device, a combination of a mixer and a metal filter, etc.

In step (E), the flattened wet polymer powder is dried to form a dried polymer powder via a device, such as an infrared dryer, which is programmable to adjust air temperature, air speed or drying time according to practical requirements for achieving energy conservation. In certain embodiments, the flattened wet polymer powder may be completely dried via a heated gas, a far infrared device, a microwave device, or the like.

In step (F), the dried polymer powder is separated in an enclosed space into a first group and a second group. The particle size of the dried polymer powder in the first group is greater than a predetermined value, and the particle size of the dried polymer powder in the second group is not greater than the predetermined value. In this embodiment, the predetermined value is 100 µm, and may be changed according to practical requirements, such as to obtain ultra-fine particles. In this embodiment, during the separating step (i.e., step (F)), the dried polymer powder having iron content not greater than three in ten thousand is removed by contact or contactless magnetic field to avoid adversely affecting subsequent applications. In certain embodiments, the separation of the dried polymer may be conducted using gas flow and vibrating screening. In certain embodiments, the dried polymer thus obtained may be 50 parts per hundred (PHR) of rubber to 80 parts per hundred (PHR) of rubber, and the mechanical property of the dried polymer may be at least 80% of that of the raw material (e.g., the thermosetting polymer object 5 of arbitrary shape).

Automated guided vehicles (AGVs) (not shown) and the conveyor 4 may be used for transferring the thermosetting polymer object 5 of arbitrary shape (i. e. , the tire crown 51 in this embodiment) to the fixture device 2. The dimension and orientation of the thermosetting polymer object 5 of arbitrary shape may be detected during transferring, so that appropriate adjustment can be made accordingly. Optical sensors (not shown) may be adapted for detecting the presence of the tire crown 51 on the rotatable disk 22, and the expandable holder 21 is then operated to press against the inner periphery of the tire crown 51. Afterwards, a motor (not shown) may be operated to rotate the rotatable disk 22 such that the expandable holder 21 and the tire crown 51 also rotate, and the smart and modularized water jet cutter device 3 is then operated to shatter the tire crown 51. In certain embodiments, the fixture device 2 may further includes a cover for noise insulation, a venting tube for venting waste gas, a filter, such as a grille screen for collecting the wet polymer powder, a collector for collecting metals parts after shattering the tire crown 51, and a smart unit, such as EtherCAT-MASTER device for controlling the fixture device 2 for ensuring proper operation and safety of operation staff.

The centralized controlling unit 33 is capable of simulating the shattering way to complete an optimized process, and then the smart and modularized water jet cutter device 3 is operated according to the optimized process. Specifically, the smart and multi-axis robotic arm 31 is turned on, a dump valve of the multi-water jets cutter head package 32 is switched from a normally open state to a normally close state, and the multi-water jets cutter head package 32 is switched from a normally close state to a normally open state for starting the shattering operation. In this embodiment, the shattering process takes 120 seconds to 150 seconds. The centralized controlling unit 33 records the process time and movement of the smart and modularized water jet cutter device 3, and makes adjustments for optimizing the process. The abovementioned features can be designed to be visualized, thereby facilitating operation and verify of the user.

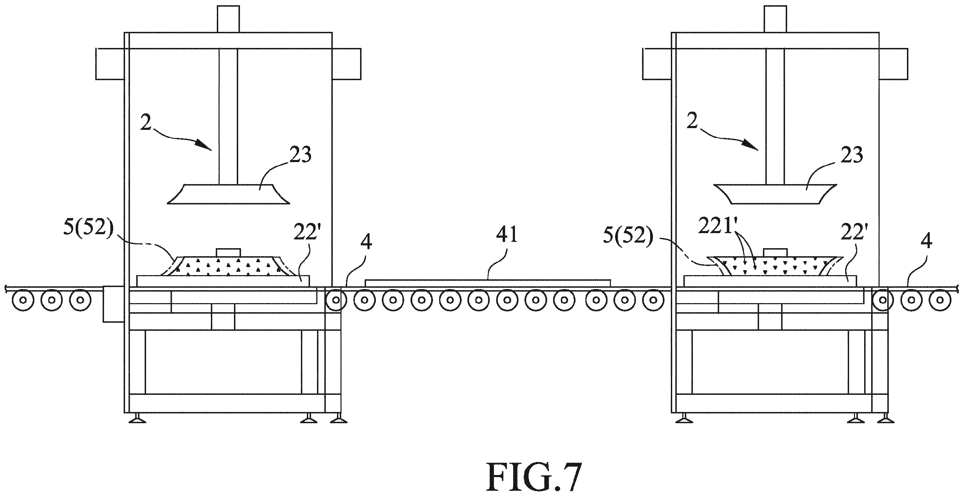

Referring to FIG. 7, in a variation, when the thermosetting polymer object 5 of arbitrary shape is the tire sidewall 52, the fixture device 2 includes a rotatable holder 22' that is frustoconical and that is adapted for the tire sidewall 52 to be sleeved thereon, and a pressing member 23 that is ring-shaped (e.g., a hollow frustoconical shape) and that is adapted to press the tire sidewall 52 against the rotatable holder 22', such that the tire sidewall 52 is fixed on the rotatable holder 22'. In some embodiments, the rotatable holder 22' may be provided with a plurality of sensors 221' (e.g., pressure sensors) for detecting whether the tire sidewall 52 is tightly fitted to the rotatable holder 22' to ensure that the tire sidewall 52 is properly shattered in subsequent shattering process. Specifically, the tire sidewall 52 is first transferred to the rotatable holder 22' via the conveyor 4. Next, the tire sidewall 52 is sleeved on the rotatable holder 22', followed by operating the pressing member 23 to press the tire sidewall 52 against the rotatable holder 22'. Afterwards, the rotatable holder 22' is operated to rotate, and the pressing member 23 and the tire sidewall 52 co-rotate with the rotatable holder 22'. The smart and modularized water jet cutter device 3 is then operated to shatter the tire sidewall 52 in a desired orientation. A turning unit 41 of the conveyor 4 may be operated to flip the tire sidewall 52 for the smart and modularized water jet cutter device 3 to shatter another side of the tire sidewall 52. The shapes of the rotatable holder 22' and the pressing member 23 may be changed according to practical requirements to reach desirable shattering result.

According to this disclosure, the fixture device 2 and the smart and modularized water jet cutter device 3 cooperate for achieving effective recycling of the thermosetting polymer object 5 of arbitrary shape. By controlling the Reynolds Number, the speed, the angle and the kinetic energy of the ejected fluid, the rotation of the rotatable multi-water jets cutter head package 32, the abovementioned contact time, etc., effective and flexible shattering of the thermosetting polymer object 5 of arbitrary shape can be achieved.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A method of recycling a thermosetting polymer object (5) of arbitrary shape, the method being **characterized by**:
operating a fixture device (2) to hold and rotate the thermosetting polymer object (5) of arbitrary shape about a predetermined axis;
operating a smart and modularized water jet cutter device (3) to shatter the thermosetting polymer object (5) held by the fixture device (2) in an outside-in manner into a wet polymer powder, the smart and modularized water jet cutter device (3) including a smart and multi-axis robotic arm (31), a rotatable multi-water jets cutter head package (32) that is co-movably disposed on the smart and multi-axis robotic arm (31), and a centralized controlling unit (33) operable to control the smart and multi-axis robotic arm (31) and the rotatable multi-water jets cutter head package (32) for shattering the thermosetting polymer object (5) of arbitrary shape, the rotatable multi-water jets cutter head package (32) including a jets head (321) that is co-movably connected to the robotic arm (31), and a plurality of rotary jets nozzles (322) that are disposed on the jets head (321) and that are divided into two groups in mirror symmetry relative to a short axis (X) of the jets head (321), the rotary jets nozzles (322) being rotatable relative to the jets head (321), the centralized controlling unit (33) being operable to control three-dimensional movement path of the robotic arm (31), a Reynolds Number and a kinetic energy of a fluid ejected by the rotatable multi-water jets cutter head package (32), a dynamic contact time between the fluid ejected by the rotatable multi-water jets cutter head package (32) and the thermosetting polymer object (5), and an attacking angle of the jets head (321) of the rotatable multi-water jets cutter head package (32), the cleanness of the thermosetting polymer object (5) and the particle size of the wet polymer powder being adjustable through controlling the centralized controlling unit (33) and selection of the modularized program of the smart and modularized water jet cutter device (3);
centrifugally and partially drying the wet polymer powder to form a partially dried wet polymer powder;
flattening the partially dried wet polymer powder to form a flattened wet polymer powder with a predetermined thickness;
completely drying the flattened wet polymer powder to form a dried polymer powder; and
separating the dried polymer powder in an enclosed space into a first group and a second group, the particle size of the dried polymer powder in the first group being greater than a predetermined value, the particle size of the dried polymer powder in the second group being not greater than the predetermined value.

2. The method as claimed in claim 1, **characterized in that** the thermosetting polymer object (5) of arbitrary shape is one of a tire crown (51) and a tire sidewall (52) obtained from cutting a waste tire.

3. The method as claimed in any one of claims 1 and 2, **characterized in that** the movement path of the robotic arm (31) is of a shape selected from the group consisting of helix, ellipse, polygon and combinations thereof.

4. The method as claimed in any one of claims 1 to 3, **characterized in that** the flattened wet polymer powder with a predetermined thickness is completely dried via a heated gas.

5. The method as claimed in any one of claims 1 to 4, **characterized in that** the dried polymer powder is separated into the two groups by gas flow and vibrating screening.

6. The method as claimed in any one of claims 1 to 5, **characterized in that** the particle diameter of the dried polymer powder in the first group is greater than 100 µm, the particle diameter of the dried polymer powder in the second group being not greater than 100 µm.

7. The method as claimed in any one of claims 1 to 6, **characterized in that** during the separating step, the dried polymer powder having iron content not greater than three in ten thousand is removed by magnetic field.

8. The method as claimed in claim 2, **characterized in that**, when the thermosetting polymer object (5) is the tire crown (51), the fixture device (2) includes a rotatable disk (22) rotatable about the predetermined axis, and an expandable holder (21) that is co-rotatably disposed on the rotatable disk (22) and that is adapted to be disposed in the tire crown (51) such that said expandable holder (21) presses against the inner periphery of the tire crown (51), so that the expandable holder (21) and the tire crown (51) are co-rotatable with the rotatable disk (22) about the predetermined axis.

9. The method as claimed in claim 2, **characterized in that**, when the thermosetting polymer object (5) is the tire sidewall (52), the fixture device (2) includes a rotatable holder (22') that is frustoconical and that is adapted for the tire sidewall (52) to be sleeved thereon, and a pressing member (23) that is hollow ring-shaped and that is adapted to press the tire sidewall (52) against the rotatable holder (22'), so as to fix said tire sidewall (52) on said rotatable holder (22'), an outer surface of the rotatable holder (22') having a plurality of needle-like sensors (221').

10. The method as claimed in any one of claims 1 to 9, **characterized in that** each of the rotary jets nozzles (322) includes a plurality of nozzle holes (323).
